# EUROPEAN PATENT APPLICATION

(11) **EP 0 665 259 A1**
(43) Date of publication of application: **02.08.1995**
(21) Application number: 95200171.7
(22) Date of filing: 25.01.1995
(51) Int. Cl.: C08J 3/07, C08J 5/02, C08G 63/672, A41D 19/00

(54) **Process for manufacturing three-dimensional articles from copolyetherester dispersions**

(30) Priority: 28.01.1994 NL 9400130
(71) Applicant: Akzo Nobel N.V., NL-6824 BM Arnhem (NL)
(72) Inventor: Geursen, Herman Johan, NL-6891 AL Rozendaal (NL)
(74) Representative: Schalkwijk, Pieter Cornelis, c.s.

(57) **Abstract**

Claimed is a process for manufacturing waterproof, water vapour permeable, three-dimensional articles, such as shoes and gloves, of copolyetherester, in which process a three-dimensional mould is treated once or several times with an aqueous dispersion of a copolyetherester in a manner analogous to that employed for a latex dispersion in the rubber industry, followed by heating to obtain a continuous film, after which the moulded article is removed from the mould after cooling, use being made of a dispersion which can be obtained by diluting a solution of the copolyetherester in N-methyl pyrrolidone with a preferably at least partially water miscible anti-solvent, optionally followed by wholly or partially replacing the liquid phase with water, dilution with water, and the removal of the solvent employed if so desired. The articles are suited to be used as such or as inserts in laminates in the form of garments, such as gloves.

## Description

The invention relates to a process for manufacturing waterproof, but water vapour permeable, three-dimensional articles, such as gloves, from copolyetherester, and to the use of such articles as "inserts" in garments.

Processes of the type mentioned in the opening paragraph are generally known. For instance, EP-B-382 801 discloses a process for manufacturing waterproof, but water vapour permeable, three-dimensional articles employing a woven or knitted fabric composed of undrawn or partially drawn continuous filaments and a copolyetherester film. To achieve the final shape, e.g., that of a glove, the laminate is drawn permanently by at least 150% at room temperature both lengthwise and crosswise.

A drawback to the laminates manufactured in this fashion consists in that the copolyetherester insert obtained by drawing lacks overall evenness. In areas which have been subjected to a high degree of drawing, the film obtained will be comparatively thin. In order to obtain an insert of sufficient strength even where there has been a high degree of drawing, resulting in a thin polymer film, use has to be made of a comparatively thick copolyetherester film. However, a thicker film will inevitably give a lower water vapour permeability. The invention now provides a process for manufacturing waterproof, but water vapour permeable, three-dimensional articles, such as gloves, from copolyetherester by means of which the drawbacks of the known process are overcome entirely or for the most part.

The invention consists in that in the process of the known type mentioned in the opening paragraph a three-dimensional mould is treated once or several times with an aqueous dispersion of a copolyetherester in a manner analogous to that used for latex dispersions in the rubber industry, followed by heating to obtain a continuous film, whereupon the moulded article is removed from the mould after cooling, with use being made of a dispersion which can be made by diluting a solution of the copolyetherester in N-methyl pyrrolidone with a preferably at least partially water miscible anti-solvent, optionally followed by the whole or partial replacement of the liquid phase by water, dilution with water, and the removal of the solvent employed if so desired.

Dispersions of copolyetheresters are generally known. For instance, US-A-3 619 276 discloses copolyetherester dispersions composed of a) a water-soluble polyoxyalkylene glycol having a molecular weight of 3000 - 15 000, b) terephthalic acid, and c) ethylene glycol. Once prepared, the copolyetherester is dissolved in an organic solvent which is not miscible with water, and then emulsified in water in the presence of a surface active agent, whereupon the solvent is removed. Examples of appropriate solvents include alicyclic ethers, acid amines, phenolates of lower carboxylic acids, pyrrolidones, chlorinated hydrocarbons, higher alcohols, ethers, ketones, esters, and nitro compounds. The examples employ only dioxane on the one hand and a mixture of 2 parts of benzyl alcohol and 88 parts of tetrachloro-ethane on the other. The resulting dispersions are used solely for the purpose of improving the surface properties of articles made of polyester, such as yarns, fibres, woven fabrics, films, sheets, tubes, rods, and the like, made, e.g., of polyethylene terephthalate or crystalline copolymers of polyethylene terephthalate, in order to hydrophilise their surface areas. In JP-A-5 7212-250 aqueous dispersions of copolyetheresters are disclosed in which 0,1 to 2 mole% of the dicarboxylic acid is made up of a metal sulphonate-containing dicarboxylic acid. The dispersions are said to be stable and suitable for use in making films of excellent waterproofness. However, these films were found to be less suited to be manufactured into three-dimensional, waterproof but water vapour permeable articles.

According to the invention, preference is given to a process in which the mould is heated to a temperature in the range of 170° to 250°C.

Copolyetheresters which, according to the invention, are eligible for use in preparing stable dispersions from which three-dimensional, waterproof, water vapour permeable articles can be manufactured, can be obtained by copolymerising an aromatic dicarboxylic acid or ester forming equivalent thereof with a dioic acid molecular weight of not more than 300, a diol or ester forming equivalent thereof with a diol molecular weight of not more than 250, and a polyalkylene oxide glycol with a molecular weight in the range of 600 to 4000 and an atomic ratio of carbon to oxygen in the range of 2,0 to 4,3, with at least 20 wt.% of the long-chain glycol having a carbon to oxygen ratio in the range of 2,0 to 2,4 and 15 to 50 wt.% being part of the copolyetherester. The aromatic dicarboxylic acid preferably is terephthalic acid or naphthalene dicarboxylic acid, while the low-molecular weight diol preferably is ethylene glycol or butane diol. In addition, preference is given to a polymer having a melting point of at least 150°C.

According to the invention, preference is given to a dispersion in which the copolyetherester consists of a plurality of recurrent intralinear long-chain ester units and short-chain ester units randomly joined head to tail through ester bonds, the long-chain ester units corresponding to the formula: 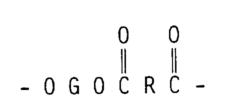
and the short-chain ester units corresponding to the formula: 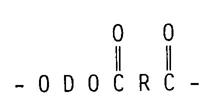
wherein G is a divalent radical remaining after the removal of terminal hydroxyl groups from at least one long-chain glycol having an average molecular weight in the range of 600 to 4000 and an atomic ratio of carbon to oxygen in the range of 2,0 to 4,3, at least 20 wt.% of the long-chain glycol having a carbon to oxygen ratio in the range of 2,0 to 2,4 and 15 to 50 wt.% being part of the copolyetherester, R is a divalent radical remaining after the removal of carboxyl groups from at least one dicarboxylic acid having a molecular weight of less than 300, and D is a divalent radical remaining after the removal of hydroxyl groups from at least one diol having a molecular weight of less than 250, with at least 70 mole% of the dicarboxylic acid employed being either terephthalic acid or 2,6-naphthalene dicarboxylic acid or its ester forming equivalents and at least 70 mole% of the low-molecular weight diol consisting of 1,4-butane diol or its ester forming equivalents, with the sum of the mole percentage of dicarboxylic acid which is neither terephthalic acid nor 2,6-naphthalene dicarboxylic acid or its ester forming equivalents and the mole percentage of low-molecular weight diol which is not 1,4-butane diol or its ester forming equivalents being not more than 30, and the short-chain ester units making up 30-70 wt.% of the copolyetherester.

Especially when at least 70 mole% of the dicarboxylic acid used in the copolyetherester is composed of terephthalic acid, preference is given to a polymer composition in which the short-chain ester units make up 40-70 wt.% of the copolyetherester.
For the preparation of these copolyetheresters reference may be had to GB-A-1 403 210 and GB-A-1 404 340.

If a copolyetherester is employed in which at least 70 mole% of the dicarboxylic acid used is composed of 2,6-naphthalene dicarboxylic acid, preference is given to a polymer composition in which the short-chain ester units make up 35-65 wt.% of the copolyetherester. For the preparation of these copolyetheresters reference may be had to US-A-3 775 375.

According to the invention, preference is given to copolyetheresters of which the short-chain ester units entirely or substantially consist of polybutylene terephthalate units or polybutylene naphthalate units. Dispersions of these copolyetheresters are easy to prepare. Moreover, articles made of these copolyetheresters generally have better physical properties than articles of copolyetheresters in which, say, 30% of the terephthalic acid or the naphthalene dicarboxylic acid has been replaced with a different dicarboxylic acid. For special uses, replacement of a small percentage of the 1,4-butane diol with some other diol and/or replacement of the terephthalic acid or the naphthalene dicarboxylic acid with a different low-molecular weight dicarboxylic acid may be of advantage. Included among the low-molecular weight diols (other than 1,4-butane diol) which are converted into short-chain ester units are acyclic, alicyclic, and aromatic dihydroxy compounds. Preferred are diols having 2-15 carbon atoms, such as ethylene glycol, propylene glycol, isobutylene glycol, pentamethylene glycol, 2,2-dimethyl trimethylene glycol, hexamethylene glycol, and decamethylene glycol, di hydroxycyclohexane, cyclohexane dimethanol, resorcinol, hydroquinone, and 1,5-dihydroxy naphthalene. Particular preference is given to aliphatic diols having 2-8 carbon atoms.
Included among the bisphenols which can be used are bis(p-hydroxy)diphenyl, bis(p-hydroxyphenyl)methane, and bis(p-hydroxyphenyl)propane. Corresponding ester forming derivatives of diols are likewise suitable for use (e.g., epoxy ethane or ethylene carbonate may be used instead of ethylene glycol). The term "low-molecular weight diols" refers to such corresponding ester forming derivatives, but with the molecular weight requirement relating to the diol as such and not to its derivatives.
The dicarboxylic acids (other than terephthalic acid or naphthalene dicarboxylic acid) which are converted with the aforementioned long-chain glycols and low-molecular weight diols into copolyesters include aliphatic, cycloaliphatic or aromatic dicarboxylic acids having a molecular weight not higher than 300. The term "dicarboxylic acid" as employed here also refers to equivalents of dicarboxylic acids having two functional carboxyl groups whose behaviour is practically the same as that of the dicarboxylic acids in the conversion with glycols and diols to copolyesters. These equivalents include esters and ester forming derivatives, such as the acid halides and anhydrides. The molecular weight requirements relate to the acid and not to its equivalent esters or ester forming derivatives. The dicarboxylic acids may contain randomly substituted groups or combinations which do not detrimentally affect copolyester formation or the use of the polymer in the elastomeric preparations according to the invention. The term "aliphatic dicarboxylic acids" as employed here refers to carboxylic acids having two carboxyl groups each attached to a saturated carbon atom. Aliphatic or cycloaliphatic acids having conjugated unsaturated bonds often cannot be used because of homopolymerisation. However, some unsaturated acids, such as maleic acid, are utilisable. The term "aromatic dicarboxylic acids" as employed here refers to dicarboxylic acids having two carboxyl groups attached to a carbon atom in an isolated or fused benzene ring. It is not necessary for the two functional carboxyl groups to be attached to the same aromatic ring, and where there is more than one ring present, they can be joined by aliphatic or aromatic divalent radicals or by other divalent radicals such as -O- or -SO2-. Preference is given to cyclohexane dicarboxylic acids and adipic acid.

The aromatic dicarboxylic acids suitable for use include naphthalene dicarboxylic acid, terephthalic acid, phthalic acid, and isophthalic acid, dibenzoic acid, substituted dicarboxyl compounds having two benzene nuclei, such as bis(p-carboxyphenyl)methane, p-oxy(p-carboxyphenyl)benzoic acid, ethylene-bis(p-oxybenzoic acid), 1,5-naphthalene dicarboxylic acid, 2,7-naphthalene dicarboxylic acid, phenanthrene dicarboxylic acid, anthracene dicarboxylic acid, 4,4'-sulphonyl dibenzoic acid, as well as C1-C12 alkyl and ring substitution derivatives thereof, such as halogen, alkoxy, and alkyl derivatives. Further, use may be made of hydroxy acids such as p-(β-hydroxyethoxy)benzoic acid, providing an aromatic dicarboxylic acid is present also. According to the invention, it is of vital importance that at least 70 mole% of the short-chain ester units, and preferably 95-100%, are the same.
For the preparation of the copolyesters preference is given to aromatic dicarboxylic acids, more particularly those having 8-16 carbon atoms, notably the phenylene dicarboxylic acids, i.e., naphthalene dicarboxylic acid, terephthalic acid, phthalic acid, and isophthalic acid. Preferably, the long-chain glycols are entirely made up of polyethylene oxide glycol. In some cases it may be desirable to employ random or block copolymers of epoxy ethane and minor amounts of a second epoxy alkane. It is preferred that the second monomer should constitute less than 40 mole% of the polyalkylene oxide glycols, more preferably, less than 20 mole%. As examples of suitable second monomers may be mentioned 1,2- and 1,3-epoxy propane, 1,2-epoxy butane, and tetrahydrofuran. Alternatively, use may be made of mixtures of polyethylene oxide glycol and a second polyalkylene oxide glycol, such as poly-1,2-propylene oxide glycol or polytetramethylene oxide glycol.

The polymers described herein can be conveniently made by a conventional ester interchange reaction. A preferred procedure involves heating the dimethyl ester of terephthalic acid or 2,6-naphthalene dicarboxylic acid with a long-chain glycol and a molar excess of butane diol in the presence of a catalyst at 150°-260°C, followed by distilling off the methanol formed by the interchange. Heating is continued until the methanol evolution is complete. Depending on temperature, catalyst, and diol excess, this interchange reaction is complete within a few minutes to a few hours. This procedure results in the preparation of a low-molecular weight prepolymer, which can be converted into a high-molecular weight copolyester by means of the method described below. Such prepolymers can also be prepared by a number of alternate esterification or ester interchange processes; for example, the long-chain glycol can be reacted with a high- or low-molecular weight short-chain ester homopolymer or copolymer in the presence of a catalyst until randomisation occurs. The short-chain ester homopolymers or copolymers can be prepared by ester interchange from either dimethyl esters and low-molecular weight diols, as above, or from free acids with diol acetates. Alternatively, the short-chain ester copolymer can be prepared by direct esterification from appropriate acids, anhydrides, or acid chlorides, e.g., with diols or by such other procedures as reaction of the acids with cyclic ethers or carbonates. This prepolymer can further be prepared by running said process in the presence of a long-chain glycol.
The resulting prepolymer is then carried to high-molecular weight by distillation of the excess of short-chain diol . This process is known as "polycondensation." During this distillation, additional ester interchange occurs to increase the molecular weight and randomise the distribution of the copolyester units. Optimum results are usually obtained if this final distillation or polycondensation is run at a pressure of not more than 130 Pa and 240°-260°C over a period of not more than 2 hours in the presence of antioxidants such as sym.di-β-naphthyl-p-phenylene-di-amine and 1,3,5-trimethyl-2,4,6-tris[3,5-di-tert.butyl-4-hydroxybenzyl]benzene. In order to avoid the products being exposed to high temperatures for excessive periods of time with possible irreversible thermal degradation, it is effective to employ a catalyst for the ester interchange reaction. While a wide variety of catalysts may be used, preference is given to organic titanates, such as tetrabutyl titanate used alone or in combination with magnesium acetate or calcium acetate. Complex titanates, such as Mg[HTi(OR)6]2, prepared from alkali or alkaline earth metal alkoxides and titanate esters are also very effective. Inorganic titanates, such as lanthanum titanate, calcium acetate/antimony trioxide mixtures, and lithium and magnesium alkoxides are representative of other catalysts which may be used.

The preparation of the dispersions according to the present invention involves first making a solution of the copolyetherester in N-methyl pyrrolidone and then mixing it with an organic anti-solvent for the copolyetherester which is miscible with said solvent as well as water miscible. A very finely divided precipitate will form, from which the solvent and anti-solvents can be removed virtually completely, e.g., by means of centrifuging and washing with water several times, after which a stable dispersion can once again be obtained by adding water. The concentration of the dispersion formed in this process is partly dependent on the composition of the copolyetherester employed and is generally in the range of 3 to 10 wt.%.
A wide range of compounds is suitable for use as anti-solvents for the copolyetherester; especially favourable results have been attained using ethanol, isopropyl alcohol, methoxypropoxypropanol, isobutoxypropanol, water, and/or, preferably, acetone.

The procedure for manufacturing three-dimensional articles according to the present invention commonly is as follows: First, a mould of, say, porcelain is dipped into a bath containing the copolyetherester dispersion. The dipping process is repeated several times, after which the material is heated to such a temperature as will cause it to melt and form a continuous film. After cooling the article is removed from the mould. The temperature to which the mould on which the dispersion is provided is heated generally is in the range of 170° to 250°C.

The invention will be further illustrated with reference to the following examples, which are not to be construed as limiting in any manner the scope of the invention. All parts and percentages mentioned in the application are by weight, unless otherwise specified.

### Example I

Into a 200 l autoclave were introduced 24,1 kg of the dimethyl ester of 2,6-naphthalene dicarboxylic acid (DM-2,6-NDC), 13,3 kg of 1,4-butane diol, 12,0 kg of polyethylene oxide glycol having an average molecular weight of 2000, and 12,0 kg of polytetramethylene oxide glycol (pTHF) having an average molecular weight of 1000. The reaction mixture was heated to 110°C, with stirring, whereupon 24,1 g of tetrabutyl titanate were added, as well as 0,25 kg of 1,3,5-trimethyl-2,4,6-tris[3,5-di-tert.butyl-4-hydroxybenzyl] as antioxidant. Upon a further increase in temperature to 171°C methanol distilled off, after which the pressure was slowly reduced to 100 Pa and the temperature raised to 248°C. This polycondensation reaction, which lasted 3 to 4 hours, led to copolyester A having a relative viscosity of 2,50 (measured on a concentration of 1,0 g in 100 g of m-cresol at 25°C). The percentage of short-chain ester units was 43,2 wt.%. Consequently, the percentage of long-chain ester units was 56,8 wt.%. The copolyetherester contained 25 wt.% of polyethylene oxide glycol and 25 wt.% of pTHF.

### Example II

In a manner analogous to that indicated in Example I there was prepared a copolyetherester B, making use of 33,3 kg of the dimethyl ester of terephthalic acid, 21,6 kg of 1,4-butane diol, and 12,5 kg of polyethylene oxide glycol (PEG) having a number average molecular weight of 4000. The reaction mixture was heated to 110°C, with stirring, after which 500 ppm of tetrabutyl titanate (calculated on dimethyl terephthalate) were added. Upon a further increase in temperature to 160°C methanol distilled off, whereupon the pressure was slowly reduced to 100 Pa and the temperature increased to 245°C. This polycondensation reaction, which lasted 3 to 4 hours, led to a product having a relative viscosity of 2,53 (measured on a concentration of 1,0 g in 100 g of m-cresol at 25°C). In the same manner as indicated above a number of copolyetheresters were prepared using varying amounts of the aforementioned polyethylene oxide glycol, as well as of polyethylene oxide glycol having a number average molecular weight of 2000 and an even quantity by weight of polytetramethylene oxide glycol (pTHF) having a number average molecular weight of 1000. The composition of the prepared copolyetheresters was as follows:

| Wt.% of short-chain ester units | molecular weight of polyalkylene oxide glycol | | ηrel |
|---|---|---|---|
| | PEG | pTHF | |
| B 74,2 | 4000 | | 2,53 |
| C 69,0 | 4000 | | 2,76 |
| D 45,6 | 2000 | 1000 | 2,64 |

### Example III

Dispersions were made of the copolyetheresters A, B, C, and D by first preparing a 5-10% solution of the polymer in N-methyl pyrrolidone and then pouring it into a three-fold excess of cooled (0°-5°C) acetone as anti-solvent. The resulting dispersion was thickened by centrifuging and worked up with water.
The preparation of the dispersion was attended with a slight (about 5%) degradation of the polymer.

The particle size distribution was virtually identical for all four dispersions:
> 10 µm 20%
10-5 µm 20%
5-1 µm 40%
1-0 µm 20%
In each case the dispersions formed a homogeneous, stable, yoghurt-like latex with a solids content of about 8 wt.%. First, the air bubbles were removed from these dispersions by dilution with an acetone/water mixture until a latex having a solids content of about 2½ wt.% was obtained; next, they were spread on a glass slab, dried at 22°C and 65% RH, and then briefly heated to 215°C, after which a homogeneous film having a thickness of about 15 µm was formed.

In another experiment a porcelain mould having the shape of a hand was dipped into dilute latex free of air bubbles and then dried at 50°C. This procedure was repeated five times, after which heating to 215°C briefly took place. After cooling the glove formed in the process was easily removed from the mould. The obtained gloves were found to be pre-eminently suitable for use in medical technics, e.g., by surgeons, dentists, and the like.

## Claims

1. A process for manufacturing waterproof, water vapour permeable, three dimensional articles, such as gloves, characterised in that a three-dimensional mould is treated once or several time with an aqueous dispersion of a copolyetherester in a manner analogous to that employed for a latex dispersion in the rubber industry, followed by heating to obtain a continuous film, after which the moulded article is removed from the mould after cooling, use being made of a dispersion which can be obtained by diluting a solution of the copolyetherester in N-methyl pyrrolidone with a preferably at least partially water miscible anti-solvent, optionally followed by wholly or partially replacing the liquid phase with water, optionally followed by removal of the solvent employed.

2. A process according to claim 1, characterised in that the mould is heated to a temperature in the range of 170° to 250°C.

3. A process according to claim 1, characterised in that use is made of a copolyetherester composed of a plurality of recurrent intralinear long-chain ester units and short-chain ester units randomly joined head-to-tail through ester bonds, the long-chain ester units corresponding to the formula: 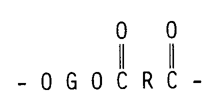 and the short-chain ester units corresponding to the formula: 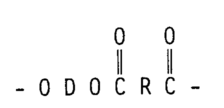 wherein G is a divalent radical remaining after the removal of terminal hydroxyl groups from at least one long-chain glycol having an average molecular weight in the range of 600 to 4000 and an atomic ratio of carbon to oxygen in the range of 2,0 to 4,3, at least 20 wt.% of the long-chain glycol having a carbon to oxygen ratio in the range of 2,0 to 2,4 and 15-50 wt.% of said glycol being part of the copolyetherester, R is a divalent radical remaining after the removal of carboxyl groups from at least one dicarboxylic acid having a molecular weight of less than 300, and D is a divalent radical remaining after the removal of hydroxyl groups from at least one diol having a molecular weight of less than 250, with at least 70 mole% of the dicarboxylic acid employed consisting either of terephthalic acid or of 2,6-naphthalene dicarboxylic acid or its ester forming equivalents and at least 70 mole% of the low-molecular weight diol consisting of 1,4-butane diol or its ester forming equivalents, and the sum of the mole percentage of dicarboxylic acid which is neither terephthalic acid nor 2,6-naphthalene dicarboxylic acid or its ester forming equivalents and the mole percentage of low-molecular weight diol which is not 1,4-butane diol or its ester forming equivalents is not more than 30, and the short-chain ester units make up 30-70 wt.% of the copolyetherester.

4. A process according to claim 3 wherein at least 70 mole% of the dicarboxylic acid employed consists of terephthalic acid, characterised in that the short-chain ester units make up 40-70 wt.% of the copolyetherester.

5. A process according to claim 4 wherein at least 70 mole% of the dicarboxylic acid employed consists of 2,6-naphthalene dicarboxylic acid, characterised in that the short-chain ester units make up 35-65 wt.% of the copolyetherester.

6. A process according to claim 1, characterised in that the water miscible organic anti-solvent can be one or more compounds from the group of ethanol, isopropyl alcohol, methoxypropoxypropanol, isobutoxypropanol, water, and/or, preferably, acetone.

7. Use of three-dimensional articles manufactured by a process according to one or more of the preceding claims as inserts in laminates in the form of garments, such as gloves and shoes.
